(19)

Europäisches
Patentamt
European
Patent Office
Office européen
des brevets

(11) **EP 2 658 109 A1**

(12) # EUROPEAN PATENT APPLICATION

(43) Date of publication:
   **30.10.2013 Bulletin 2013/44**

(51) Int Cl.:
   **H02M 3/335** (2006.01)　　　**H02J 3/38** (2006.01)

(21) Application number: **12275119.1**

(22) Date of filing: **21.08.2012**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **27.04.2012 KR 20120044832**

(71) Applicants:
   • **Samsung Electro-Mechanics Co., Ltd
     Suwon, Gyunggi-Do (KR)**
   • **Research & Business Foundation
     Sungkyunkwan University
     Suwon-si, Gyeonggi-do 440-746 (KR)**

(72) Inventors:
   • **Lee, Tae Won
     Gyunggi-do (KR)**

   • **Heo, Min Ho
     Gyunggi-do (KR)**
   • **Song, Doo Young
     Gyunggi-do (KR)**
   • **Kang, Ju Suk
     Gyunggi-do (KR)**
   • **Ji, Yong Hyok
     Gyunggi-do (KR)**
   • **Kim, Jun Gu
     Gyunggi-do (KR)**
   • **Kim, Young Ho
     Seoul (KR)**
   • **Won, Chung Yuen
     Gyunggi-do (KR)**

(74) Representative: **Potter Clarkson LLP
   The Belgrave Centre
   Talbot Street
   Nottingham
   NG1 5GG (GB)**

(54) **Power converting apparatus, operating method thereof, and solar power generation system**

(57)　　A power converting apparatus for a solar power generation system includes: a power converting unit (202, 203) converting an input signal generated by a solar cell module (100) into an output signal; and a control circuit unit controlling an operation of the power converting unit (202, 203), wherein the power converting unit includes at least one transformer (216, 220), and a current sensor (223, 224) and a switching circuit (214, 215; 218, 219) connected to a primary winding of the at least one transformer (216, 220), and the control circuit unit calculates a voltage and a current of the input signal using a current of the primary winding of the at least one transformer sensed by the current sensor and performs a maximum power point tracking control so that the power converting unit is operated at a maximum power point.

FIG. 3

# Description

## CROSS-REFERENCE TO RELATED APPLICATIONS

This application claims the priority of Korean Patent Application No. 10-2012-0044832 filed on April 27, 2012, in the Korean Intellectual Property Office, the disclosure of which is incorporated herein by reference.

## BACKGROUND OF THE INVENTION

### Field of the Invention

The present invention relates to a power converting apparatus capable of being operated with a maximum power point tracking (MPPT) control scheme without a voltage sensor and a current sensor of an input terminal, an operating method thereof, and a solar power generation system.

### Description of the Related Art

Recently, as green technology has emerged as an important issue in a range of industries, research into environmentally- friendly energy generation in which carbon- based energy is not used has been actively conducted. Solar power generation has been prominent as a leading technique within the field of environmentally-friendly energy generation. In particular, research into methods for increasing the efficiency of a solar power generation cell generating energy from solar rays and methods for increasing efficiency in a circuit required when energy generated by a solar power generation cell is converted into energy suitable for home or industrial purposes has been actively conducted.

The circuit connected to the solar power generation cell includes a power converting apparatus converting a high level direct current (DC) input signal from a solar cell module to generate a DC output signal. In the solar cell module, a magnitude of maximum power being output and a condition (a maximum power point) for generating the maximum power are changed according to an amount of solar radiation and a surrounding temperature. Therefore, the power converting apparatus connected to the solar cell module needs to be operated to output maximum power even in the case of a change in conditions such as an amount of solar radiation, ambient temperature, and the like.

In order to control the power converting apparatus by tracking a maximum power point changed according to operating conditions, a current and a voltage of an input signal generated in the solar cell module and input to the power converting apparatus need to be detected. Therefore, a general power converting apparatus includes a current sensor and a voltage sensor in input terminal thereof to which the input signal generated in the solar cell module is applied. However, when the sensors for detecting the voltage and the current are provided in the input terminal as described above, problems such as an increase in costs, an increase in design limitations throughout the entire system, and the like, may be caused.

The following Related Art Documents (Patent Documents 1 and 2) have disclosed a configuration of controlling a power converting apparatus by an MPPT method so as to track a maximum power point of power generated in a solar cell module. However, in Patent Documents 1 and 2, only a configuration in which sensors for detecting a voltage and a current are provided between the solar cell module and the power converting apparatus has been disclosed.

[Prior Art Document]

   (Patent Document 1) Korean Patent Laid-Open Publication No. 10-2007-0033395
   (Patent Document 2) Japanese Patent Laid-Open Publication No. JP 2004-280220

## SUMMARY OF THE INVENTION

An aspect of the present invention provides a power converting apparatus capable of calculating a voltage and a current of an input signal from a solar cell module without a voltage sensor and a current sensor generally provided between the solar cell module and an input terminal thereof and controlling a power converting circuit to be operated at a maximum power point, based on the calculated voltage and current values, an operating method thereof, and a solar power generation system.

According to an aspect of the present invention, there is provided a power converting apparatus for a solar power generation system, the power converting apparatus including: a power converting unit converting an input signal generated by a solar cell module into an output signal; and a control circuit unit controlling an operation of the power converting unit, wherein the power converting unit includes at least one transformer, and a current sensor and a switching circuit connected to a primary winding of the at least one transformer, and the control circuit unit calculates a voltage and a current of the input signal using a current of the primary winding of the at least one transformer sensed by the current sensor and performs a maximum power point tracking (MPPT) control so that the power converting unit is operated at a maximum power point.

The power converting unit may include at least one flyback converter and convert a direct current (DC) input signal into an alternating current (AC) output signal.

The control circuit unit may control balancing of currents flowing in primary windings of at least two transformers using the currents of the primary windings sensed by at least two current sensors connected to the primary windings.

The control circuit unit may calculate the current of the input signal from the sum of currents of primary windings of at least two transformers sensed by at least two current sensors connected to the primary windings.

The control circuit unit may calculate the current of the input signal based on a primary inductance of the transformer and operational characteristics of a switching device included in the power converting unit.

The operational characteristics of the switching device may include at least one of a switching period, a maximum duty ratio, and a turn-on time of the switching device.

The power converting apparatus may further include at least one input capacitor provided between the solar cell module and the power converting unit, and the control circuit unit may calculate the voltage of the input signal based on an amount of electrical charge charged in the input capacitor during a turn-on time of a switching device included in the power converting unit and an amount of electrical charge discharged from the input capacitor during a turn-off time of the switching device.

The amount of electrical charge charged in the input capacitor during the turn-on time of the switching device may be the same as that of electrical charge discharged from the input capacitor during the turn-off time of the switching device.

The control circuit unit may include a phase detector detecting phase information of a power system connected to an output terminal of the power converting unit from the output signal of the power converting unit; a sinusoidal wave generator generating a rectified sinusoidal wave from the phase information; an MPPT controller generating a current command value for the MPPT control based on the current and the voltage of the input signal; an auxiliary switch controller generating an auxiliary switch control signal using the current command value and the sinusoidal wave; and a main switch controller generating a main switch control signal for controlling current balancing, based on the current flowing in the primary winding of the transformer.

According to another aspect of the present invention, there is provided an operating method of a power converting apparatus, the operating method including: receiving an input signal from a solar cell module; calculating a current of the input signal using a current of a primary winding of at least one transformer detected by a current sensor connected to the primary winding; calculating a voltage of the input signal using the calculated current; determining whether or not maximum power point tracking (MPPT) is accomplished using the calculated current and the calculated voltage; and controlling an operation of a switching device connected to the at least one transformer according to whether or not the MPPT is accomplished.

The controlling of the operation of the switching device may include determining a duty ratio of the switching device.

The operating method may further include detecting currents of primary windings of at least two transformers by current sensors connected to the primary windings; and adjusting balancing of the currents of the primary windings of the at least two transformers.

In the calculating of the current, the current of the input signal may be calculated based on a primary inductance of the transformer and a switching period, a maximum duty ratio, and a turn-on time of the switching device.

In the calculating of the voltage, the voltage of the input signal may be calculated based on an amount of electrical charge charged in at least one input capacitor provided at an output terminal of the solar cell module during a turn-on time of the switching device and an amount of electrical charge discharged from the at least one input capacitor during a turn-off time of the switching device.

The amount of electrical charge charged in the input capacitor during the turn-on time of the switching device may be the same as that of electrical charge discharged from the input capacitor during the turn-off time of the switching device.

The controlling of the operation of the switching device may include generating a current command value for the maximum power point tracking based on the current and the voltage of the input signal received by a power converting unit; generating an auxiliary switch control signal using a sinusoidal wave generated based on a voltage phase of an output signal output by the power converting unit and the current command value; and generating a main switch control signal from currents respectively flowing in primary windings of at least two transformers included in the power converting unit.

In the generating of the main switch control signal, balancing of the currents respectively flowing in the primary windings of the at least two transformers may be controlled.

According to another aspect of the present invention, there is provided a solar power generation system including: a power converting unit converting an input signal transferred from a solar cell array including at least one solar cell to generate an output signal; a controlling unit controlling the power converting unit to be operated at a maximum power point using a current and a voltage of the input signal; and a power supplying unit supplying power to the controlling unit, wherein the controlling unit calculates the voltage and the current of the input signal from a current flowing in a primary winding of at least one transformer included in the power converting unit and controls the power converting unit to be operated at the maximum power point, based on the calculated current and voltage.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a diagram showing a power generation system including a power converting apparatus according to an embodiment of the present invention;

FIG. 2 is a block diagram schematically showing the power converting apparatus included in the power generation system shown in FIG. 1;

FIG. 3 is a circuit diagram showing the power converting apparatus according to the embodiment of the present invention;

FIG. 4 is a block diagram showing a control circuit unit included in the power converting apparatus according to the embodiment of the present invention;

FIG. 5 is a graph showing a primary current of a transformer according to an operation of a switching device including the power converting apparatus according to the embodiment of the present invention;

FIG. 6 is a schematic equivalent circuit diagram of the power converting apparatus according to the embodiment of the present invention;

FIG. 7 is a graph illustrating an operation of a switching device in the equivalent circuit diagram shown in FIG. 6; and

FIG. 8 is a flowchart illustrating an operating method of the power converting apparatus according to the embodiment of the present invention.

## DETAILED DESCRIPTION OF THE INVENTION

Embodiments of the present invention will be described in detail with reference to the accompanying drawings. These embodiments will be described in detail to allow those skilled in the art to practice the present invention. It should be appreciated that various embodiments of the present invention are different but are not necessarily exclusive. For example, specific shapes, configurations, and characteristics described in an embodiment of the present invention may be implemented in another embodiment without departing from the spirit and the scope of the present invention. In addition, it should be understood that positions and arrangements of individual components in each disclosed embodiment may be changed without departing from the spirit and the scope of the present invention. Therefore, a detailed description provided below should not be construed as being restrictive. In addition, the scope of the present invention is defined only by the accompanying claims and their equivalents if appropriate. Similar reference numerals will be used to describe the same or similar functions throughout the accompanying drawings.

Hereinafter, embodiments of the present invention will be described in detail with reference to the accompanying drawings so that those skilled in the art may easily practice the present invention.

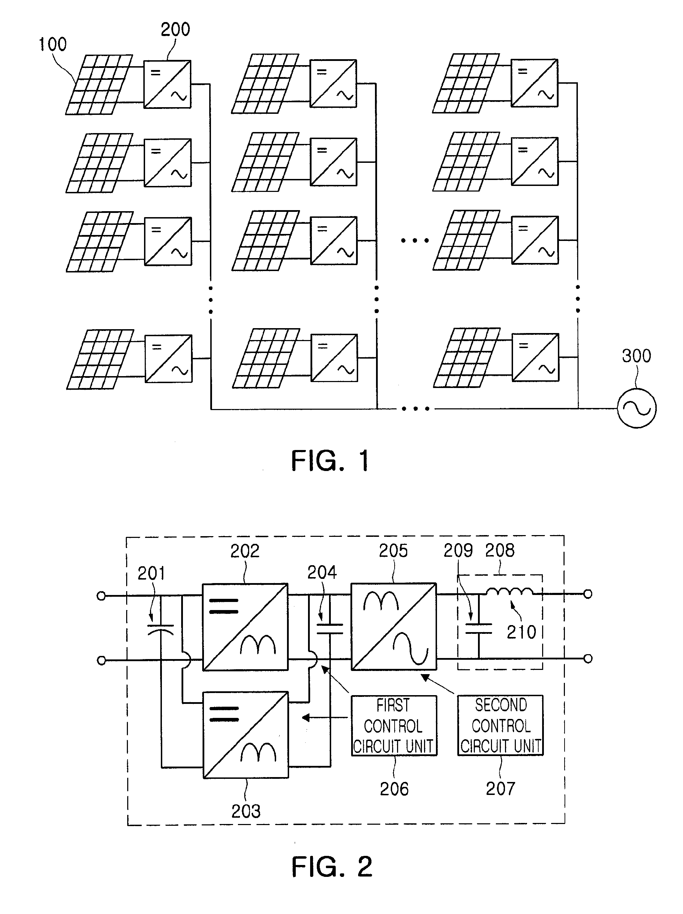

FIG. 1 is a diagram showing a power generation system including a power converting apparatus according to an embodiment of the present invention.

Referring to FIG. 1, a solar cell module 100 may be connected to an input terminal of a power converting unit 200, and a power system 300 may be connected to an output terminal of the power converting unit 200. The solar cell module 100 may include a single solar cell or a plurality of solar cells, and power generated therein may be converted by the power converting unit 200. For example, the power converting unit 200 may convert an input signal having a high direct current (DC) voltage level into a signal corresponding to commercial alternating current (AC) power and then output the converted signal. To this end, the power converting unit 200 may include a DC to DC converter circuit, a DC to AC converter circuit, and the like.

In the solar power generation system shown in FIG. 1, a magnitude (a maximum power point) of maximum power generated by the solar cell module 100 and a condition under which the solar cell module 100 may generate the maximum power may be determined according to an amount of solar radiation, a surrounding temperature, and the like. For example, when the amount of solar radiation increases, the maximum power point of the solar cell module 100 may increase, and when the surrounding temperature increases, the maximum power point of the solar cell module 100 may decrease. Therefore, the power converting unit 200 connected to the solar cell module 100 needs to be operated so as to generate and output a maximum power meeting various conditions of the input signal transferred from the solar cell module 100.

FIG. 2 is a block diagram schematically showing the power converting apparatus included in the power generation system shown in FIG. 1.

Referring to FIG. 2, the power converting apparatus 200 according to the present embodiment may include an input capacitor 201, at least one or more DC to DC power converting units 202 and 203, a DC link capacitor 204, a DC to AC power converting unit 205, first and second control circuit units 206 and 207, and an output filter 208. The input capacitor 201, a capacitor removing a voltage ripple to smooth the input signal so as to be close to a DC signal, may include a plurality of capacitors connected in parallel.

The DC to DC power converting units 202 and 203 may adjust a level of the DC signal transferred through the input capacitor 201. As an example, the DC to DC power converting units 202 and 203 may include a flyback converter circuit and convert the input DC signal having a high voltage level of several hundreds of volts into a DC signal having a low voltage level. Operations of the DC to DC power converting units 202 and 203 may be controlled by the first control circuit unit 206.

Output signals of the DC to DC power converting units 202 and 203 may be input to the DC to AC power converting unit 205 through the DC link capacitor 204. The DC to AC power converting unit 205 may convert the DC signal having a level adjusted by the DC to DC power converting units 202 and 203 into an AC signal synchronized with a commercial power system. An operation of the DC to AC power converting unit 205 may be controlled by the second control circuit unit 207.

Meanwhile, the DC to AC power converting unit 205 may have a predetermined output filter 208 connected to an output terminal thereof. The output filter 208 may include a capacitor 209 and an inductor 210 and serve to smooth a high frequency current transferred to a secondary side of a transformer of the flyback converter circuit included in the DC to DC power converting units 202 and 203 to a low frequency (50 to 60 Hz) current corresponding to a frequency of the commercial power system.

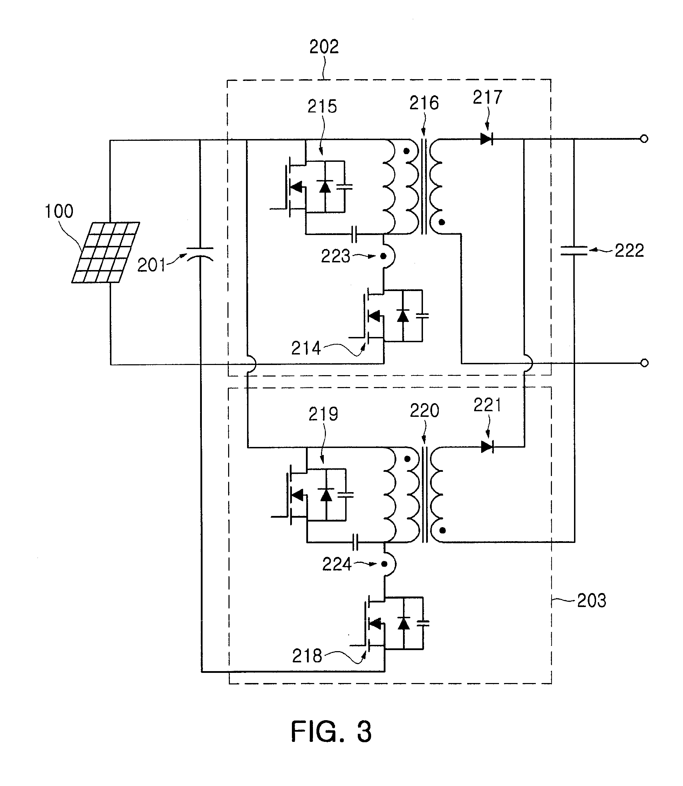

As described above, the DC to DC power converting units 202 and 203 may convert the DC input signal transferred from the solar cell module through the input capacitor 201 into a DC output signal having a relatively low level. Here, a magnitude (a maximum power point) of maximum power of a signal generated by the solar cell module and a condition for generating the maximum power may be changed according to environmental factors such as an ambient temperature surrounding the solar cell module, an amount of solar radiation, and the like. Therefore, the first control circuit unit 206 needs to control the operations of the DC to DC power converting units 202 and 203 so as to track the maximum power point according to a change in an environment surrounding the solar cell module. In order to track the maximum power point of the solar cell module, a current and a voltage of the DC input signal transferred from the solar cell module need to be detected. Next, a description thereof will be provided with reference to FIG. 3.

FIG. 3 is a circuit diagram showing the power converting apparatus according to the embodiment of the present invention.

The DC input signal generated by the solar cell module 100 may be input to the DC to DC power converting units 202 and 203 through the input capacitor 201. The DC to DC power converting units 202 and 203 may be implemented as a flyback converter circuit. In FIG. 3, it is assumed that a plurality of DC to DC power converting units 202 and 203 are connected in parallel with the input capacitor 201. Hereinafter, for convenience of explanation, an operation of a first DC to DC power converting unit 202 will mainly be described. A second DC to DC power converting unit 203 may be operated similarly to the first DC to DC power converting unit 202.

The first DC to DC power converting unit 202 may include a main switch 214, an auxiliary switch 215, a transformer 216, an output diode 217, and a current sensor 223. The main switch 214 may be connected to a primary winding of the transformer 216, energy may be charged in the primary winding of the transformer 216 during a turn-on time of the main switch 214, and the energy charged in the primary winding of the transformer 216 may be transferred to a secondary winding of the transformer 216 during a turn-off time of the main switch 214. As a result, the turn-on time and the turn-off time of the main switch 214 are appropriately adjusted to control a duty ratio of the current, whereby the first DC to DC power converting unit 202 may be operated at the maximum power point of the solar cell module 100. The auxiliary switch 215 may be implemented by a snubber switch and limit a current when a capacitor connected in series with the auxiliary switch 215 is discharged.

The transformer 216 may have the current sensor 223 and the main switch 214 connected in series with the primary winding thereof and the output diode 217 connected to the secondary winding thereof. The current sensor 223 may sense a current flowing in the primary winding of the transformer 216, and the first control circuit unit 206 may calculate the current and the voltage of the input signal transferred from the solar cell module 100 using the current of the primary winding of the transformer 216 detected by the current sensor 223 and control current balancing of the first DC to DC power converting unit 202 and the second DC to DC power converting unit 203.

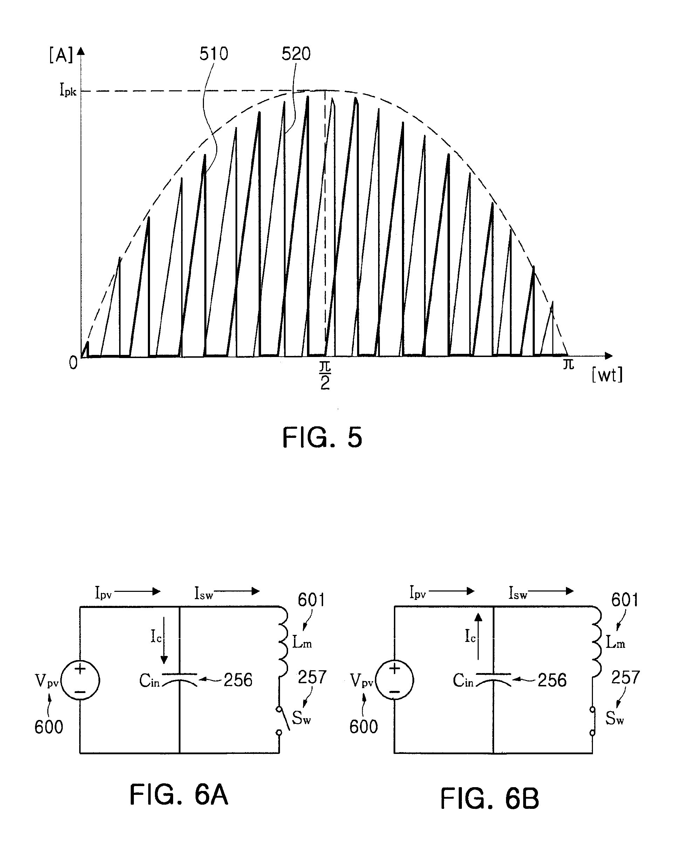

The current of the input signal may be calculated from the sum of a current detected in a first current sensor 223 included in the first DC to DC power converting unit 202 and a current detected in a second current sensor 224 included in the second DC to DC power converting unit 203. Hereinafter, a method of calculating the current and the voltage of the input signal will be described with reference to FIGS. 5 through 7.

FIG. 5 is a graph showing a primary current of a transformer according to an operation of a switching device included in the power converting apparatus according to the embodiment of the present invention.

FIG. 5, a graph showing currents during a turn-on time of each of the main switches 214 and 218, shows a first current $i_{Sp1}$ flowing in the primary winding of the transformer 216 included in the first DC to DC power converting unit 202 and a second current $i_{Sp2}$ flowing in a primary winding of a transformer 220 included in the second DC to DC power converting unit 203. A horizontal axis indicates an electrical angle and a vertical axis indicates a current value flowing in the main switches 214 and 218.

Hereinafter, for convenience of explanation, the first main switch 214 will be described. This description of the first main switch 214 may be applied to the second main switch 218 as it is. First, the current flowing during the turn-on time of the first main switch 214 may be represented by the following Equation 1.

[Equation 1]

$$i_{Sp1}(t)=\frac{V_{dc}}{L_1}\,t_i$$

In Equation 1, $i_{Sp1}(t)$ is a current flowing in the first main switch 214 in a time $t_i$, $V_{dc}$ is an input voltage, $L_1$ is a primary inductance of the transformer 216. Meanwhile, an average current of the input signal transferred from the solar cell module 100 may be calculated by the following Equation 2.

[Equation 2]

$$I_{avg}=\frac{1}{4}\,\frac{V_{dc}\,T_{sw}\,d_p^{\,2}}{L_1}$$

In Equation 2, $T_{sw}$ indicates a switching period of the first main switch 214, and $d_p$ indicates a maximum duty ratio of the first main switch 214. The current of the input signal may be calculated from the sum of the currents of the first and second main switches 214 and 218 calculated as described above.

FIG. 6 is a schematic equivalent circuit diagram of the power converting apparatus according to the embodiment of the present invention.

In the circuit diagram of FIG. 6, $i_{pv}$ and $V_{pv}$ indicate a PV current and a PV voltage transferred from the solar cell module 100, respectively, and $i_C$ indicates a current flowing in an input capacitor 256. Meanwhile, indicates a current flowing in a switch 257. Here, it is assumed that the switch 257 is operated in a $T_{SW}$ period. A control signal applied to a gate terminal of the switch 257 may be a pulse width modulation (PWM) signal. Therefore, the control circuit unit 206 may include a circuit for generating the PWM signal, for example, a comparing circuit and a carrier generating circuit.

In the circuit diagram of FIG. 6, an amount of electrical charge charged in the input capacitor 256 during a turn-off time of the switch 257 may be the same as an amount of electrical charge discharged from the input capacitor 256 during a turn-on time of the switch 257. Therefore, the following Equation 3 may be derived.

[Equation 3]

$$\triangle q(t_{on})=I_{pv}t_{chg}$$

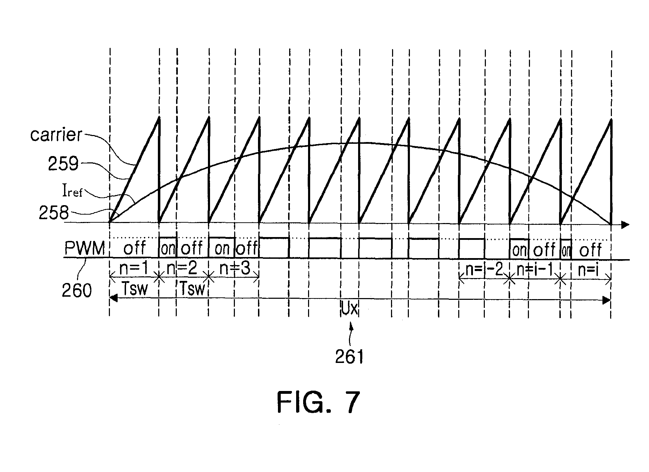

In Equation 3, $\triangle q(t_{on})$ indicates an amount of electrical charge changed during the turn-on time of the switch 257, $I_{pv}$ indicates an input current, and $t_{chg}$ indicates a charging time of electrical charge. $t_{chg}$ indicating the charging time of electrical charge may be represented by the sum of the turn-off time of the switch 257 and a dwell time. Below, a PWM signal controlling the operation of the switch 257 will be described with reference to FIG. 7.

FIG. 7 is a graph illustrating an operation of a switching device in the equivalent circuit diagram shown in FIG. 6.

Referring to FIG. 7, the graph shows a reference wave 258, a carrier 259, and a PWM signal 260 generated from the reference wave 258 and the carrier 259. The PWM signal 260 controlling the a turn-on/off of the switch 257 may be operated to turn the switch 257 off when the carrier 259 has a value larger than the reference value 258 and to turn the switch 257 on when the carrier 259 has a value smaller than the reference wave 258. Therefore, charging and discharging times of the input capacitor 256 may be calculated as follows.

[Equation 4]

$$t_{chg} = T_{SW} - t_{on} = t_{off} + t_{dwell}$$

[Equation 5]

$$t_{on}=T_{SW}d_p\sin\frac{\pi}{n}\,i$$

As shown in the graph of FIG. 7, the charging time $t_{chg}$ of the input capacitor 256 may be defined as a value obtained by subtracting the turn-on time $t_{on}$ of the switch 257 from the operation period $T_{SW}$ of the switch 257 or a value obtained by adding the dwell time $t_{dwell}$ of the switch 257 to the turn-off toff time of the switch 257. In Equation 5, i indicates the number of switching operations of the switch 257, and n is defined as $u_x/T_{SW}$, a ratio between a period $U_x$ of the reference wave 258 and the operation period $T_{SW}$ of the switch 257.

Referring to the equivalent circuit diagram of FIG. 6, the input voltage $V_{pv}$ generated and transferred from the solar cell module 100 may be calculated from the amount of electrical charge charged in or discharged from the input capacitor 256 by the operation of the switch 257. It is assumed that the switch 257 repeats a total of m periods during a single period of the reference wave 258, the amount of electrical charge charged in the input capacitor 256 may be calculated as represented by the following Equation 6.

[Equation 6]

$$\sum_{i=1}^{m} q(t_{on}) = \sum_{i=1}^{m} I_{pv} t_{chg}$$

In the right side of Equation 6, a value of $I_{pv}$ indicating the input current may be calculated from the current values detected in the current sensors 223 and 224 included in the first and second DC to DC power converting units 202 and 203, and $t_{chg}$ may be calculated from a difference between the switching period and the turn-on time of the switch 257. Therefore, the voltage of the input signal may be detected from the amount of electrical charge charged in or discharged from the input capacitor 256 calculated from Equation 6.

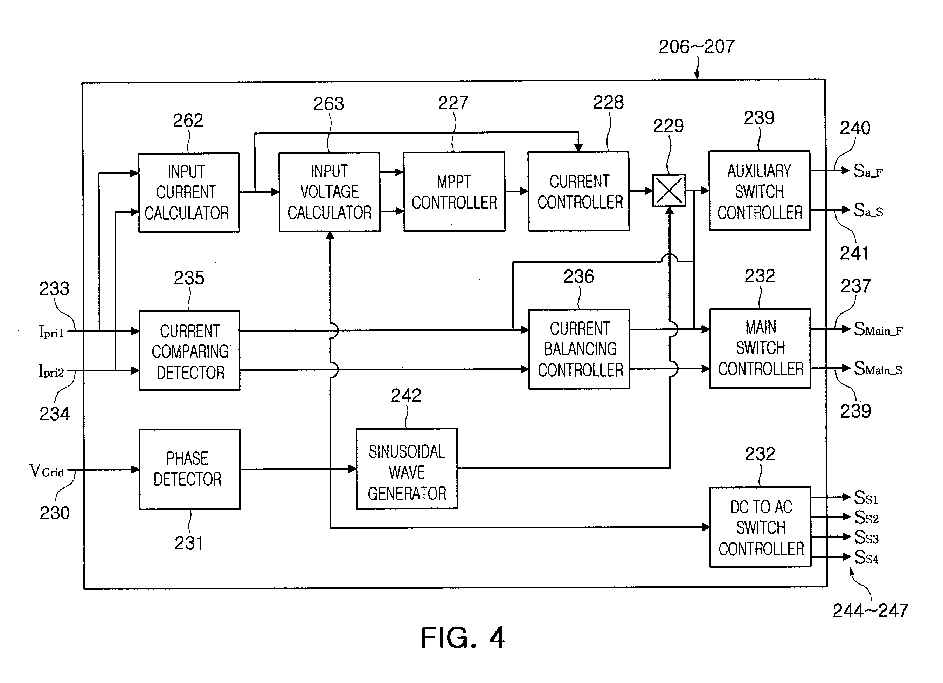

FIG. 4 is a block diagram showing a control circuit unit included in the power converting apparatus according to the embodiment of the present invention.

Referring to FIG. 4, the control circuit unit 206 according to the present embodiment may include a current comparing detector 235, an input current calculator 262, an input voltage calculator 263, a maximum power point tracking (MPPT) controller 227, a current controller 228, an auxiliary switch controller 239, a main switch controller 232, and the like. In addition, the control circuit unit 206 according to the present embodiment may further include a current balancing controller 236, a phase detector 231, a sinusoidal wave generator 242, a DC to AC switch controller 243, and the like.

The current comparing detector 235 may receive currents $I_{pri1}$ and $I_{pri2}$ flowing from the current sensors 223 and 224 included in the DC to DC power converting units 202 and 203 to the primary windings of the transformers 216 and 220. In addition, the input current calculator 262 may calculate the input current using the currents $I_{pri1}$ and $I_{pri2}$ detected by the current sensors 223 and 224. As described above, the input current may be calculated from the sum of the currents $I_{pri1}$ and $I_{pri2}$ detected by the current sensors 223 and 224 of the DC to DC power converting units 202 and 203 connected in parallel with the input capacitor 201.

The input current calculated by the input current calculator 262 may be transferred to the input voltage calculator 263. The input voltage calculator 263 may calculate the voltage of the input signal from the current of the input signal through the process described in Equations 1 to 6. The current and the voltage of the input signal may be transferred to the MPPT controller 227 and may be then used to control the power converting apparatus 200 to be operated at the maximum power point of the solar cell module 100.

The current controller 228 may generate a current control signal for controlling the MPPT from the MPPT controller 227. The current control signal may be generated by multiplying an output of the current controller 228 by an output of the sinusoidal wave generator 242. The sinusoidal wave generator 242 may be connected to the phase detector 231 outputting phase information of the power system to generate a rectified sinusoidal wave having frequency integer times larger than that of the power system from the phase information. A multiplier 229 may multiply the rectified sinusoidal wave by a switch control signal to generate phase and magnitude command values of an output current.

The main switch controller 232 may generate a carrier having a preset fixed frequency and magnitude when the phase and magnitude command values of the output current are smaller than a duty ratio limiting value and may generate a carrier having a varied frequency and magnitude when the phase and magnitude command values of the output current are larger than the duty ratio limiting value. The generated carrier may be compared with the phase and magnitude command values of the output current to thereby generate PWM control signals $S_{Main\_F}$ and $S_{Main\_S}$ for controlling the main switches, this process being the same as the process described with reference to FIGS. 6 and 7.

Meanwhile, an output of the current comparing detector 235 may be transferred to the current balancing controller 236. The current balancing controller 236 may control the balancing of the currents flowing in the primary windings of the transformers 216 and 220 of the DC to DC power converting units 202 and 203. An output signal of the current balancing controller 236 may be calculated together with the duty ratio calculated after the maximum power point tracking control and may then be used to generate the PWM control signals $S_{Main\_F}$ and $S_{Main\_S}$ for controlling the main switches.

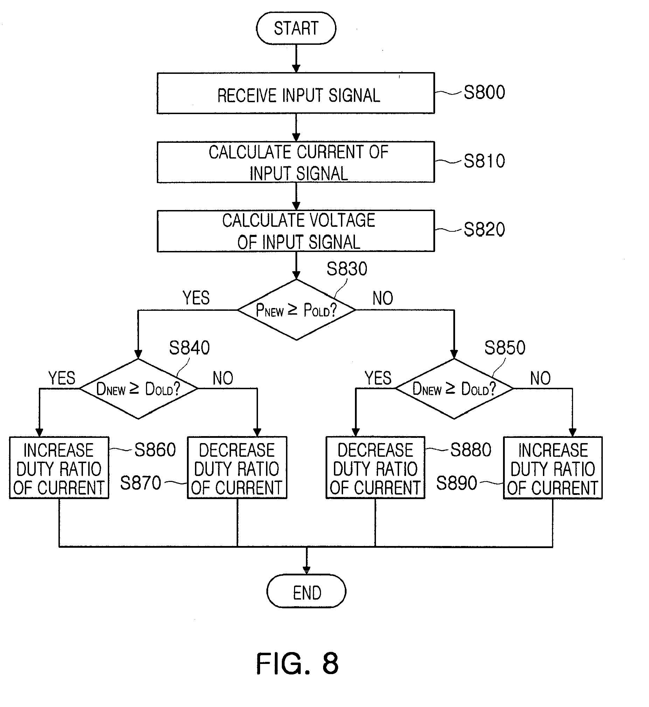

FIG. 8 is a flowchart illustrating an operating method of the power converting apparatus according to the embodiment of the present invention.

Referring to FIG. 8, the operating method of the power converting apparatus 200 according to the present embodiment starts with receiving an input signal from the solar cell module 100 (S800). The input signal may be applied through the input capacitor 201 provided between the solar cell module 100 and the power converting apparatus 200, and the input capacitor 201 may be provided in order to remove a ripple component from the input signal.

The control circuit unit 206 first calculates the current of the input signal (S810). The power converting apparatus 200 may include the DC to DC power converting units 202 and 203 that are implemented as a flyback converter circuit, and the flyback converter circuit has the current sensors 223 and 224 respectively connected to the primary windings of the transformers 216 and 220 thereof. Therefore, the control circuit unit 206 may calculate the sum of the currents detected by the current sensors 223 and 224 to calculate the current of the input signal.

After the current of the input signal is calculated, the control circuit unit 206 calculates the voltage of the input signal based on the current of the input signal and the amount of electrical charge charged in and discharged from the input capacitor 201 (S820). The amount of electrical charge charged in or discharged from the input capacitor 201 may be estimated from the turn-on time and the turn-off time of the main switches 214 and 218, the input current, and the like, and the voltage of the input signal may be calculated based on variations between the amount of electrical charge charged in the input capacitor 201 and the amount of electrical charge discharged from the input capacitor 201.

After the voltage and the current of the input signal are calculated, the control circuit unit 206 compares magnitudes of old power $P_{OLD}$ and new power $P_{NEW}$ in order to control the maximum power point tracking (S830). After the control circuit unit 206 compares the magnitudes of the new power $P_{NEW}$ and the old power $P_{OLD}$, it compares an old duty ratio $D_{OLD}$ and a new duty ratio $D_{NEW}$ (S840 and S850).

Under the condition that the new power $P_{NEW}$ is larger than the old power $P_{OLD}$, when the new duty ratio $D_{NEW}$ is larger than the old duty ratio $D_{OLD}$, the control circuit unit 206 increases duty ratios of the main switches 214 and 218 (S860). To the contrary, under the condition that the new power $P_{NEW}$ is larger than the old power $P_{OLD}$, when the new duty ratio $D_{NEW}$ is smaller than the old duty ratio $D_{OLD}$, the control circuit unit 206 decreases the duty ratios of the main switches 214 and 218 (S870).

On the other hand, under the condition that the new power $P_{NEW}$ is smaller than the old power $P_{OLD}$, when the new duty ratio $D_{NEW}$ is larger than the old duty ratio $D_{OLD}$, the control circuit unit 206 decreases the duty ratios of the main switches 214 and 218 (S880), and under the condition that the new power $P_{NEW}$ is smaller than the old power $P_{OLD}$, when the new duty ratio $D_{NEW}$ is smaller than the old duty ratio $D_{OLD}$, the control circuit unit 206 increases the duty ratios of the main switches 214 and 218 (S890). Through the above-mentioned operations, the power converting apparatus 200 may be controlled to track the maximum power point without a voltage sensor and a current sensor provided in the input terminal thereof.

Meanwhile, after operations S860 to S890 of controlling the operations of the main switches 214 and 218 for controlling the maximum power point tracking, an operation of controlling the balancing of the current flowing in the primary winding of the first transformer 216 and the current flowing in the primary winding of the second transformer 220 may be further performed. In this case, final duty ratios of the main switches 214 and 218 may be adjusted so as to accomplish the maximum power point tracking control and the current balancing control.

As set forth above, according to embodiments of the present invention, a current and a voltage of an input signal may be calculated based on a current flowing in a primary winding of a transformer of a power converting unit without a current sensor and a voltage generally provided in an input terminal receiving the input signal from a solar cell module. Therefore, the voltage sensor and the current sensor of the input terminal are removed, whereby overall costs may be reduced, and several other peripheral circuits for driving the sensors may be removed, whereby complexity of a circuit design may be reduced.

While the present invention has been shown and described in connection with the embodiments, it will be apparent to those skilled in the art that modifications and variations can be made without departing from the spirit and scope of the invention as defined by the appended claims.

**Claims**

1. A power converting apparatus for a solar power generation system, the power converting apparatus comprising:

   a power converting unit converting an input signal generated by a solar cell module into an output signal; and
   a control circuit unit controlling an operation of the power converting unit,
   wherein the power converting unit includes at least one transformer, and a current sensor and a switching circuit connected to a primary winding of the at least one transformer, and
   the control circuit unit calculates a voltage and a current of the input signal using a current of the primary winding of the at least one transformer sensed by the current sensor and performs a maximum power point tracking (MPPT) control so that the power converting unit is operated at a maximum power point.

2. The power converting apparatus of claim 1, wherein the power converting unit includes at least one flyback converter and converts a direct current (DC) input signal into an alternating current (AC) output signal.

3. The power converting apparatus of claim 1, wherein the control circuit unit controls balancing of currents flowing in primary windings of at least two transformers using the currents of the primary windings sensed by at least two current sensors connected to the primary windings.

4. The power converting apparatus of claim 1, wherein the control circuit unit calculates the current of the input signal from the sum of currents of primary windings of at least two transformers sensed by at least two current sensors connected to the primary windings.

5. The power converting apparatus of claim 1, wherein the control circuit unit calculates the current of the input signal based on a primary inductance of the transformer and operational characteristics of a switching device included in the power converting unit.

6. The power converting apparatus of claim 5, wherein the operational characteristics of the switching device include at least one of a switching period, a maximum duty ratio, and a turn-on time of the switching device.

7. The power converting apparatus of claim 1, further comprising at least one input capacitor provided between the solar cell module and the power converting unit,
   wherein the control circuit unit calculates the voltage of the input signal based on an amount of electrical charge charged in the input capacitor during a turn-on time of a switching device included in the power converting unit and an amount of electrical charge discharged from the input capacitor during a turn-off time of the switching device.

8. The power converting apparatus of claim 7, wherein the amount of electrical charge charged in the input capacitor during the turn-on time of the switching device is the same as that of electrical charge discharged from the input capacitor during the turn-off time of the switching device.

9. The power converting apparatus of claim 1, wherein the control circuit unit includes:

   a phase detector detecting phase information of a power system connected to an output terminal of the power converting unit from the output signal of the power converting unit;
   a sinusoidal wave generator generating a rectified sinusoidal wave from the phase information;
   an MPPT controller generating a current command value for the MPPT control based on the current and the voltage of the input signal;
   an auxiliary switch controller generating an auxiliary switch control signal using the current command value and the sinusoidal wave; and
   a main switch controller generating a main switch control signal for controlling current balancing, based on the current flowing in the primary winding of the transformer.

10. An operating method of a power converting apparatus, the operating method comprising:

    receiving an input signal from a solar cell module;
    calculating a current of the input signal using a current of a primary winding of at least one transformer detected by a current sensor connected to the primary winding;
    calculating a voltage of the input signal using the calculated current;
    determining whether or not maximum power point tracking (MPPT) is accomplished using the calculated current and the calculated voltage; and
    controlling an operation of a switching device connected to the at least one transformer according to whether or not the MPPT is accomplished.

11. The operating method of claim 10, wherein the controlling of the operation of the switching device includes determining a duty ratio of the switching device.

12. The operating method of claim 10, further comprising:

    detecting currents of primary windings of at least two transformers by current sensors connected to the primary windings; and
    adjusting balancing of the currents of the primary windings of the at least two transformers.

13. The operating method of claim 10, wherein, in the calculating of the current, the current of the input signal is calculated based on a primary inductance of the transformer and a switching period, a maximum duty ratio, and a turn-on time of the switching device.

14. The operating method of claim 10, wherein, in the calculating of the voltage, the voltage of the input signal is calculated based on an amount of electrical charge charged in at least one input capacitor provided at an output terminal of the solar cell module during a turn-on time of the switching device and an amount of electrical charge discharged from the at least one input capacitor during a turn-off time of the switching device.

15. The operating method of claim 14, wherein the amount of electrical charge charged in the input capacitor during the turn-on time of the switching device is the same as that of electrical charge discharged from the input capacitor during the turn-off time of the switching device.

**16.** The operating method of claim 10, wherein the controlling of the operation of the switching device includes:

generating a current command value for the maximum power point tracking based on the current and the voltage of the input signal received by a power converting unit;
generating an auxiliary switch control signal using a sinusoidal wave generated based on a voltage phase of an output signal output by the power converting unit and the current command value; and
generating a main switch control signal from currents respectively flowing in primary windings of at least two transformers included in the power converting unit.

**17.** The operating method of claim 16, wherein, in the generating of the main switch control signal, balancing of the currents respectively flowing in the primary windings of the at least two transformers is controlled.

**18.** A solar power generation system comprising:

a power converting unit converting an input signal transferred from a solar cell array including at least one solar cell to generate an output signal;
a controlling unit controlling the power converting unit to be operated at a maximum power point using a current and a voltage of the input signal; and
a power supplying unit supplying power to the controlling unit,
wherein the controlling unit calculates the voltage and the current of the input signal from a current flowing in a primary winding of at least one transformer included in the power converting unit and controls the power converting unit to be operated at the maximum power point, based on the calculated current and voltage.

FIG. 1

FIG. 2

FIG. 3

FIG. 4

FIG. 5

FIG. 6A

FIG. 6B

FIG. 7

START

RECEIVE INPUT SIGNAL ~S800

CALCULATE CURRENT OF
INPUT SIGNAL ~S810

CALCULATE VOLTAGE
OF INPUT SIGNAL ~S820

S830

YES $P_{NEW} \geq P_{OLD}$? NO

S840

YES $D_{NEW} \geq D_{OLD}$? NO

S850

YES $D_{NEW} \geq D_{OLD}$? NO

INCREASE
DUTY RATIO
OF CURRENT ~S860

DECREASE
DUTY RATIO
OF CURRENT
S870

DECREASE
DUTY RATIO
OF CURRENT ~S880

INCREASE
DUTY RATIO
OF CURRENT
S890

END

FIG. 8

EP 2 658 109 A1

Europäisches
Patentamt
European
Patent Office
Office européen
des brevets

# EUROPEAN SEARCH REPORT

Application Number

EP 12 27 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KASA N ET AL: "Flyback type inverter for small scale photovoltaic power system", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. 2, 5 November 2002 (2002-11-05), pages 1089-1094, XP010632855, DOI: 10.1109/IECON.2002.1185424 ISBN: 978-0-7803-7474-4 | 1,2,5,6, 10,11, 13,18 | INV. H02M3/335 H02J3/38 |
| Y | * page 1090 - page 1092 * | 7,8,14, 15 | |
| X | PATEL H ET AL: "MPPT Scheme for a PV-Fed Single-Phase Single-Stage Grid-Connected Inverter Operating in CCM With Only One Current Sensor", IEEE TRANSACTIONS ON ENERGY CONVERSION, IEEE SERVICE CENTER, PISCATAWAY, NJ, US, vol. 24, no. 1, 1 March 2009 (2009-03-01), pages 256-263, XP011251431, ISSN: 0885-8969 * page 256 - page 260 * | 1,2,5,6, 10,11, 13,18 | |
| X | JIANHUA YUAN ET AL: "DC voltage sensorless control strategy of grid-tied two-stage three-phase photovoltaic system", POWER ELECTRONICS AND ECCE ASIA (ICPE&ECCE), 2011 IEEE 8TH INTERNATIONAL CONFERENCE ON, IEEE, 30 May 2011 (2011-05-30), pages 1908-1912, XP031956004, DOI: 10.1109/ICPE.2011.5944408 ISBN: 978-1-61284-958-4 * the whole document * | 1,2,5,6, 10,13,18 | TECHNICAL FIELDS SEARCHED (IPC)<br><br>H02M<br>H02J |

-/--

The present search report has been drawn up for all claims

| Place of search | Date of completion of the search | Examiner |
|---|---|---|
| Munich | 19 August 2013 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

Europäisches
Patentamt

European
Patent Office

Office européen
des brevets

**EUROPEAN SEARCH REPORT**

Application Number

EP 12 27 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 102 043 419 A (YINGWEILI NEW ENERGY TECHNOLOGY SHANGHAI CO LTD) 4 May 2011 (2011-05-04) * abstract; figures 2,3 * ----- | 7,8,14, 15 | |
| X,P | YOUNG-HO KIM ET AL: "Sensorless current balancing and MPPT control for photovoltaic AC module type interleaved flyback inverter", POWER ELECTRONICS AND MOTION CONTROL CONFERENCE (IPEMC), 2012 7TH INTERNATIONAL, IEEE, 2 June 2012 (2012-06-02), pages 1363-1367, XP032215863, DOI: 10.1109/IPEMC.2012.6259001 ISBN: 978-1-4577-2085-7 * the whole document * ----- | 1-18 | |

TECHNICAL FIELDS
SEARCHED (IPC)

The present search report has been drawn up for all claims

| Place of search | Date of completion of the search | Examiner |
|---|---|---|
| Munich | 19 August 2013 | Braccini, Roberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**ANNEX TO THE EUROPEAN SEARCH REPORT
ON EUROPEAN PATENT APPLICATION NO.**

EP 12 27 5119

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2013

| Patent document cited in search report | Publication date | Patent family member(s) | Publication date |
|---|---|---|---|
| CN 102043419 A | 04-05-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120044832
- KR 1020070033395

- JP 2004280220 A